# EUROPÄISCHE PATENTSCHRIFT

(11) **EP 0 930 257 B1**
(45) Veröffentlichungstag und Bekanntmachung des Hinweises auf die Patenterteilung: **05.11.2003**
(21) Anmeldenummer: 99100475.5
(22) Anmeldetag: 12.01.1999
(51) Int. Cl.: B65G 57/28

(54) **Verfahren und Vorrichtung zum Stapeln von unverpackten Schmelzkäsescheiben**
Method and device for piling non-packed slices of processed cheese
Procédé et dispositif pour empiler des tranches non-emballées de fromage fondu

(30) Priorität: 20.01.1998 DE 19801878
(43) Veröffentlichungstag der Anmeldung: 21.07.1999
(73) Patentinhaber: Natec Reich, Summer GmbH & Co. KG, 88178 Heimenkirch (DE)
(72) Erfinder: Baur, Wilhelm, 88167 Gestratz (DE); Hartmann, Franz, 88171 Weiler-Simmerberg (DE)
(74) Vertreter: Riebling, Peter, Dr.-Ing.

(56) Entgegenhaltungen:
- FR-A- 1 234 388
- FR-A- 2 294 957
- US-A- 2 905 341
- US-A- 2 989 195

## Beschreibung

Die Erfindung betrifft ein Verfahren und eine Vorrichtung zum Stapeln von unverpackten Schmelzkäsescheiben nach dem jeweiligen Oberbegriff der unabhängigen Patentansprüche 1 und 6.

Es sind Anlagen zur Herstellung von Schmelzkäsescheiben bekannt, welche einzeln verpackte und gestapelte Schmelzkäsescheiben liefern.
Gastronomie und Grossverbraucher wünschen sich jedoch einfache Handhabung der einzelnen Schmelzkäsescheiben, d.h. leicht trennbare, jedoch nicht einzeln verpackte Schmelzkäsescheiben. Derartige Anlagen zur Herstellung von unverpackten, gestapelten Schmelzkäsescheiben sind bekannt. Es werden mehrere, übereinander liegende Käsebahnen hergestellt, diese werden fortwährend intermittierend geschnitten, so daß sich einzelne Stapel von mehreren übereinanderliegenden und unverpackten Schmelzkäsescheiben ergeben. Je nach Anzahl der gleichzeitig verarbeiteten Käsebahnen, bestehen diese Einfachstapel aus z.B. 5, 10 oder 20 einzelnen Schmelzkäsescheiben.
In vielen Fällen werden jedoch Stapel mit z.B. 30, 40 oder mehr übereinanderliegenden Käsescheiben gewünscht, so daß man sich bisher damit abgeholfen hat, die aus der Maschine kommenden Einfachstapel manuell zu größeren Mehrfachstapeln aufzustapeln. Diese manuelle Tätigkeit ist sehr monoton, arbeitsaufwendig und kostenintensiv.

Aus dem Stand der Technik gehen dazu die US 2,905,341 A (Anderson), die US 2,989,195 A (Dreyer) und die FR 2 294 957 A (Rengo Co) hervor.

Bei der US 2,989,195 A sind zwei zwangsweise über einen Riemen miteinander gekoppelte Wendestationen miteinander verbunden. Das zu wendende Produkt wird durch Stege am Außenumfang der Wendestation aufgenommen und hochgestellt. Die Vorderkante des Steges, d. h. also die radial äußere Fläche schiebt die zu stapelnde Packung auf die Ebene des zweiten Drehkreuzes bringt. Das heißt also der Transport der Packungen von der einen Wendestation in die weitere Wendestation erfolgt mit Hilfe der Stege an der ersten Wendestation, welche immer Schritt für Schritt die abgelegten Packungen in Längsrichtung weiterschieben. Eine derartige Vorrichtung würde jedoch bei der Stapelung von Schmelzkäsepackungen niemals funktionieren, denn der gebildete Stapel ist so weich, dass es nicht möglich ist, diese Stapel mittels eines einzigen Steges zu transportieren.

Die Druckschrift US 2,989,195 offenbart hingegen kein Drehkreuz, sondern lediglich einen Schwenkarm, der bedarfsweise schwenkbar in eine Hochstellung oder in eine horizontale, abgesenkte Stellung abgesenkt werden kann. Ein Drehkreuz ist damit nicht offenbart.

Bei dieser Druckschrift ist zwar ein Band dargestellt, welches mit einem Antrieb angetrieben wird. Dieses Band geht jedoch nur bis vor dem Schwenkarm der zweiten, nachgeschalteten Wendestation. Dies bedeutet, dass die Packungen sich gegenseitig auf der Schiebeebene der zweiten Wendestation aufstauen, wobei die Packungen sich selbst also voranschieben. Dies wäre mit empfindlichen Käsescheiben und daraus gebildeten Stapeln auf keinen Fall möglich.

Außerdem muss das Band bei dieser Druckschrift getaktet werden, weil die auf dem Band liegenden Packungen immer nur so lange auf die nachgeschaltete Schiebeebene der zweiten Wendestation geschoben werden können, bis diese Schiebeebene voll ist und der Schwenkarm entsprechend mit umzukippenden Packungen gefüllt ist.

Dies bedeutet aber einen relativ hohen Maschinenaufwand, denn dies bedeutet die Taktung eines Bandes und die Taktung einer nachgeschalteten Wendestation, was mit hohem Maschinenaufwand verbunden ist.

Für die Druckschrift FR 2 294 957 gilt im Übrigen auch die gleiche Kritik, weil dort zwei miteinander verbundene Transportbänder auf unterschiedlichen Höhenniveaus ausgebildet sind. Bei dieser Druckschrift erfolgt das Aufrichten des Stapels nicht in einer Wendestation sondern es sind lediglich Schwenkarme vorhanden, die sich jeweils an den vordersten oder hintersten Teil des Stapels anlegen. Dies wäre jedoch mit empfindlichen Schmelzkäsestapeln auf keinen Fall möglich, weil der Stapel dadurch beschädigt werden würde. Somit ist der Transport empfindlicher Schmelzkäsescheiben über Höhenunterschiede eines Transportbandes wie in der FR 2 294 957 beschrieben nicht anwendbar.

Der Erfindung liegt deshalb die Aufgabe zugrunde, ein Verfahren und eine Vorrichtung zum Stapeln von unverpackten Schmelzkäsescheiben vorzuschlagen, durch welche das Aufstapeln vollkommen automatisiert wird, ohne dass dabei die Schmelzkäsescheiben beschädigt werden.

Diese Aufgabe wird durch die kennzeichnenden Merkmale der unabhängigen Patentansprüche 1 und 6 gelöst.

Die Erfindung beruht darauf, daß die unverpackten, bereits bei der Produktion zu Einfachstapeln gestapelten Schmelzkäsescheiben zu einer ersten Wendestation transportiert werden, wo die einzelnen Stapel um ihre horizontale Achse um 90° gekippt werden, so daß sie auf ihrer Stirnfläche zu liegen kommen.

Die aufrecht stehenden Einfachstapel werden zu einer zweiten, taktweise arbeitenden Wendestation transportiert und dort zu mehreren aneinandergereiht.
Sind zwei oder mehrere Einfachstapel auf diese Art aneinandergereiht, dann wird die zweite Wendestation, aktiviert und kippt die aneinandergereihten Einfachstapel nochmals um 90° um ihre gemeinsame horizontale Achse. Dadurch kommen die zwei oder mehrere Stapel von Schmelzkäsescheiben übereinander zu liegen und bilden einen einzigen Mehrfachstapel, der zur Weiterverarbeitung und Verpackung einer nachfolgenden Verarbeitungsstation zugeführt werden kann.
Als Transporteinrichtung werden vorzugsweise ein oder mehrere Transportbänder eingesetzt, die aus mehreren umlaufenden Riemen bestehen.

Die Schmelzkäsescheiben verlassen also bereits zu Einfachstapeln aufgestapelt die Produktionsmaschine und werden durch die erfindungsgemäße Vorrichtung zu größeren Mehrfachstapeln aufgestapelt.

Vorzugsweise sind die aus der Produktionsmaschine kommenden Schmelzkäsescheiben in Transportrichtung gesehen links und rechts versetzt übereinander gestapelt, um das Abnehmen einzelner Käsescheiben vom Stapel zu erleichtern. Die Stirnfläche der zu stapelnden Einfachstapel bildet jedoch eine Ebene, so daß eine ebene Aufstandfläche vorhanden ist.

Gemäß der Erfindung besteht die erste Wendestation aus einem Drehkreuz, welches im Bereich des Transportbands angeordnet ist und dieses durchgreift.
Die auf dem ersten Transportband transportierten Einfachstapel von Käsescheiben werden durch einen vertikal stehenden Arm des Drehkreuzes gestoppt, durch den unter dem Stapel liegenden horizontalen Arm des Drehkreuzes einzeln erfasst und um 90° gedreht und wieder auf dem Transportband abgelegt. Der jeweils gedrehte Einfachstapel von Käsescheiben kommt dabei auf seiner Stirnfläche zu liegen und wird zur zweiten Wendestation transportiert.

Die gedrehten Einfachstapel von Käsescheiben gelangen in den Bereich der zweiten Wendestation. Die zweite Wendestation besteht vorzugsweise aus einem Drehkreuz. Die Einfachstapel von Käsescheiben werden vom Transportband bis an den vertikalen Arm des Drehkreuzes transportiert, stoßen dort an und werden zu zweien oder mehreren aneinandergereiht. Liegen, je nach gewünschter Anzahl, zwei oder mehrere Einfachstapel aneinandergereiht vor, so wird das Drehkreuz in Transportrichtung in Bewegung gesetzt. Die am vertikalen Arm des Drehkreuzes aufgelaufenen Käsescheibenstapel werden durch den darunterliegenden horizontalen Arm ergriffen und um 90° nach vorne gedreht, so daß die zwei oder mehreren Einfachstapel auf dem Transportband übereinander zu liegen kommen und einen einzigen Mehrfachstapel bilden.

Die Mehrfachstapel von Schmelzkäsescheiben werden nun vom Transportband weitertransportiert und einem weiteren Verarbeitungs- oder Verpackungsschritt zugeführt.

In einer Weiterbildung der vorliegenden Erfindung ist vorgesehen, daß nicht nur eine Reihe von nacheinander folgenden Einfachstapeln verarbeitet werden kann, sondern daß die Stapelvorrichtung gleichzeitig mehrere nebeneinander laufende Reihen von Einfachstapeln gleichzeitig verarbeiten kann.

Die Anzahl der zu einem Mehrfachstapel übereinander gestapelten Einfachstapel ist frei wählbar und wird nur durch die Standstabilität der so erzeugten Mehrfachstapel begrenzt.

Nach der zweiten Wendestation kann eine Station zur Chargierung der Mehrfachstapel zu mehreren hintereinander liegenden Einheiten angeordnet sein. Die Chargierstation besteht dabei vorzugsweise aus mehreren nacheinander angeordneten Aushebern, welche die einzeln eintreffenden Mehrfachstapel für eine gewisse Zeit vom Transportband abheben und sie als Charge gemeinsam wieder auf dem Transportband absetzten.

Im folgenden wird die Neuerung anhand von mehrere Ausführungswege darstellenden Zeichnungen näher erläutert. Hierbei gehen aus den Zeichnungen und ihrer Beschreibung weitere erfindungswesentliche Merkmale und Vorteile der Neuerung hervor. Es zeigen:
- Figur 1:: eine schematische Seitenansicht der erfindungsgemäßen Stapelvorrichtung;
- Figur 2:: eine Draufsicht auf die Anordnung nach Figur 1;
- Figur 3:: eine vergrößerte Ansicht vom Bereich der Wendestationen in Figur 1;
- Figur 4:: eine schematische Seitenansicht einer Ausführungsform, die nicht Teil der Erfindung ist.

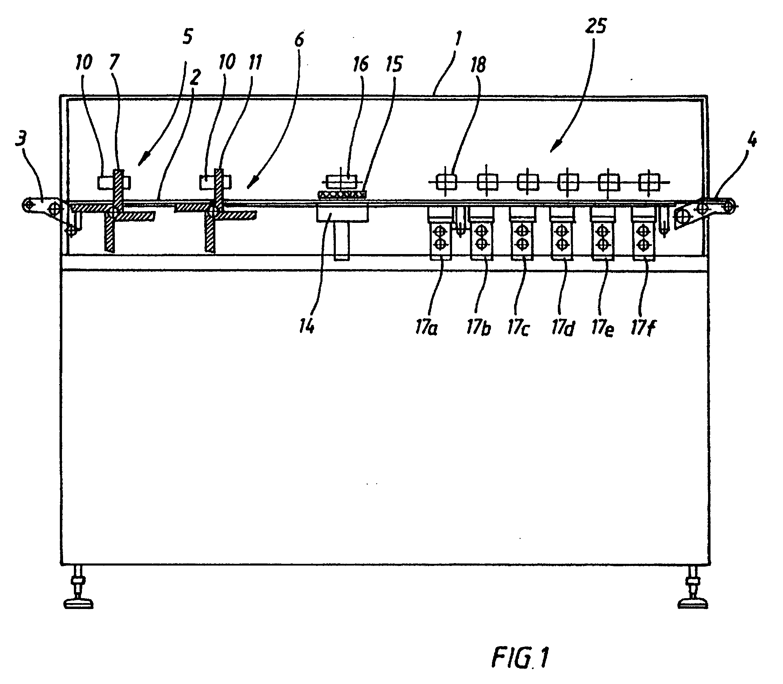

Figuren 1 bis 3 zeigen eine Ausführungsform der Stapelvorrichtung, welche an einem Maschinengehäuse 1 angeordnet ist. Entlang des Gehäuses verläuft ein Transportband 2, welches endlos über zwei Umlenkeinrichtungen 3,4 geführt ist. Die Einfachstapel von Käsescheiben werden vom Transportband 2 in Richtung 19 transportiert, und gelangen zur ersten Wendestation 5, welche aus einem Drehkreuz 7 besteht. Dort werden die Einfachstapel um 90° gedreht und gelangen zu einer zweiten, aus einem Drehkreuz 11 bestehenden Wendestation 6, und werden dort zu mehreren aufgestaut und nochmals um 90° gedreht, so daß zwei oder mehrere Einfachstapel übereinander zu liegen kommen.

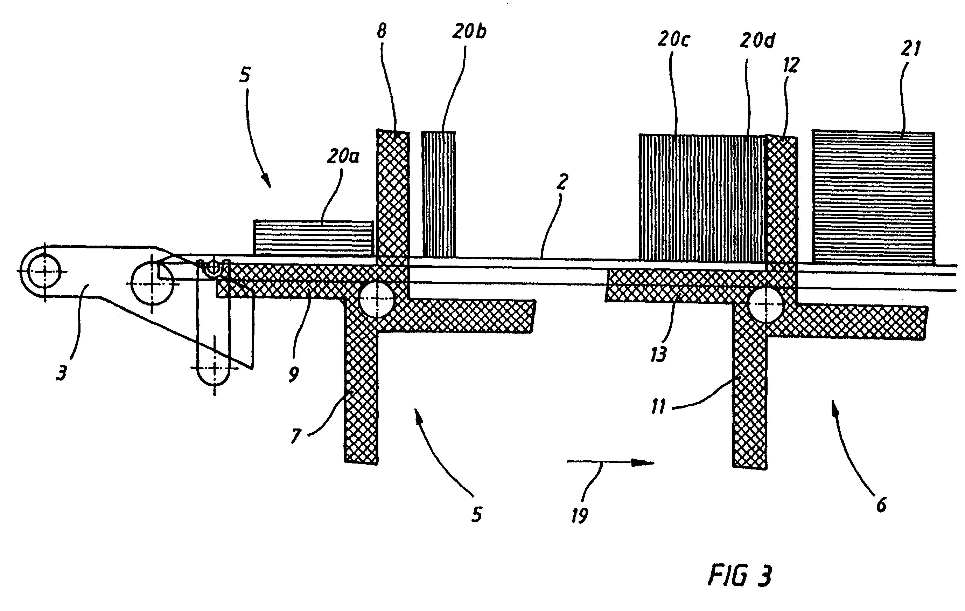

Einzelheiten des Stapelvorgangs zeigt Figur 3.
Die erste Wendestation 5 besteht aus einem Drehkreuz 7, mit vier um 90° versetzt auf einer horizontalen Achse angeordneten Armen 8, 9. Diese Arme 8,9 sind so angeordnet, daß sie durch entsprechende Zwischenräume die Ebene des Transportbandes 2 durchgreifen können. In Ruhestellung befindet sich jeweils ein Arm 9 des Drehkreuzes 7 in horizontaler Position gleichauf mit der Ebene des Transportbandes 2 und ein angrenzender Arm 8 in vertikaler Position.
Die auf dem Transportband 2 transportierten Einfachstapel 20a von Käsescheiben werden durch den vertikal stehenden Arm 8 des Drehkreuzes 7 gestoppt, durch den unter dem Stapel 20a liegenden Arm 9 des Drehkreuzes 7 einzeln erfasst und um 90° gedreht und wieder auf dem Transportband 2 abgelegt. Der jeweils gedrehte Einfachstapel 20b von Käsescheiben kommt dabei auf seiner Stirnfläche zu liegen und wird zur zweiten Wendestation 6 transportiert.

Die bereits von der ersten Wendestation 5 gedrehten Einfachstapel 20c, 20d von Käsescheiben werden vom Transportband 2 weitertransportiert und gelangen in den Bereich der zweiten Wendestation 6. Die zweite Wendestation besteht ebenfalls aus einem Drehkreuz 11 mit vier um 90° versetzt auf einer horizontalen Achse angeordneten Armen 12, 13. Diese Arme 12,13 sind so angeordnet, daß sie durch entsprechende Zwischenräume die Ebene des Transportbandes 4 durchgreifen können. In Ruhestellung befindet sich jeweils ein Arm 13 des Drehkreuzes 11 in horizontaler Position gleichauf mit der Ebene des Transportbandes 2 und ein angrenzender Arm 12 in vertikaler Position. Die Einfachstapel 20c, 20d von Käsescheiben werden durch das Transportband 2 zum vertikalen Arm 12 des Drehkreuzes 11 transportiert, stossen dort an und werden zu zweien oder mehreren aneinandergereiht. Liegen, je nach gewünschter Anzahl, zwei oder mehrere Einfachstapel 20c, 20d von Käsescheiben aneinandergereiht vor, so wird das Drehkreuz 11 in Förderrichtung 19 in Bewegung gesetzt. Die am vertikalen Arm 12 des Drehkreuzes 11 aufgelaufenen Käsescheibenstapel 20c, 20d werden durch den darunterliegenden horizontalen Arm 13 ergriffen und um 90° nach vorne gedreht, so daß die zwei oder mehrere Einfachstapel wieder auf dem Transportband 2 übereinander zu liegen kommen und einen einzigen Mehrfachstapel 21 bilden. Im Bereich der Wendestationen 5, 6 sind Fenster 10 angeordnet, durch welche mittels Sensoren das Vorhandensein von Käsestapeln beobachtet wird, um die Aktion der Wendestationen entsprechend steuern zu können.

Die Mehrfachstapel 21 von Schmelzkäsescheiben werden nun vom Transportband 2 weitertransportiert und einem weiteren Verarbeitungs- oder Verpackungsschritt zugeführt.

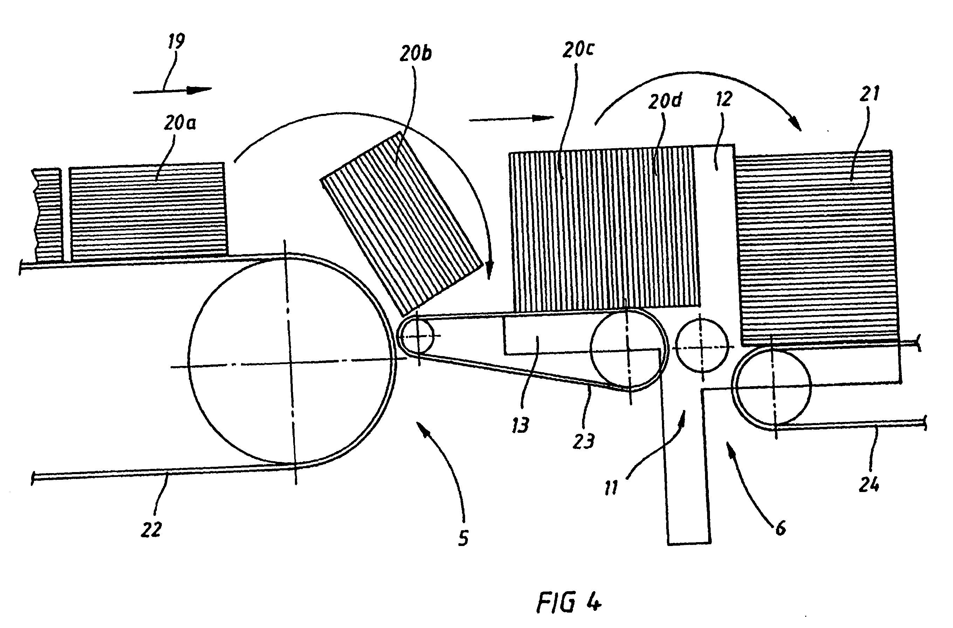

Figur 4 zeigt eine Ausführungsform, die von der Erfindung jedoch nicht schutzbegehrend beansprucht wird. Anstelle nur eines einzigen Transportbandes sind hier mindestens zwei 22,23 Transportbänder vorgesehen. Man erkennt ein erstes kontinuierlich angetriebenes Transportband 22, auf dem von der Produktionsmaschine kommende Einfachstapel 20a von Käsescheiben in Pfeilrichtung 19 transportiert werden. In Reihe zum ersten Transportband 22 ist ein zweites, getaktetes Transportband 23 angeordnet und durch einen Zwischenraum vom ersten Transportband 22 getrennt. Die Transportbänder 22,23 sind vertikal gegeneinander versetzt angeordnet, wobei das in Transportrichtung 19 gesehen erste Transportband 22 gegenüber dem nachfolgenden Transportband 23 höher angeordnet ist.
Am Ende des ersten Transportbands 22 fallen die Einfachstapel 20b vom ersten höheren Transportband 22 auf das zweite, niedrigere Transportband 23 und drehen sich während des Fallens um die horizontale Achse, so daß sie um 90° gedreht mit der Stirnfläche nach unten auf den zweiten Transportband 23 zu liegen kommen. Die beiden Transportbänder 22,23 bilden somit eine erste Wendestation 5.

Vom zweiten Transportband werden die bereits von der ersten Wendestation 5 gedrehten Einfachstapel 20c, 20d von Käsescheiben weitertransportiert und gelangen in den Bereich der zweiten Wendestation 6. Diese arbeitet identisch wie bereits in Zusammenhang mit den Figuren 1 bis 3 beschrieben.

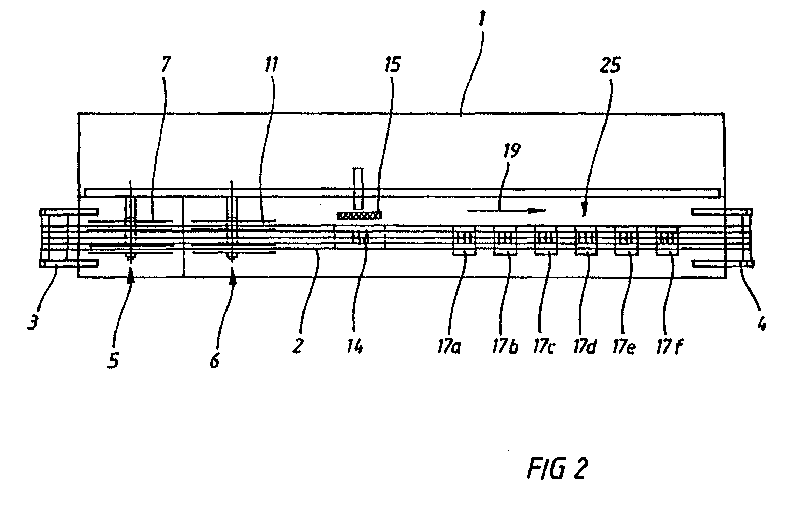

Wie man in den Figuren 1 und 2 erkennt, ist nach der zweiten Wendestation ein Ausheber 14 angeordnet. Ein Sensor beobachtet durch das Fenster 16 die gebildeten Mehrfachstapel 21 und setzt den Ausheber 14 in Aktion, sobald ein unsauber gestapelter Mehrfachstapel 21 erkannt wird. Der Mehrfachstapel 21 wird vom Transportband 2 abgehoben und durch einen Stempel 15 in Richtung quer zur Transportrichtung 19 entfernt.

Nachfolgend ist eine Chargierstation 25 angeordnet, welche die einzeln eintreffenden Mehrfachstapel zu mehreren hintereinander liegenden Einheiten anordnet. Die Chargierstation 25 besteht dabei vorzugsweise aus mehreren nacheinander angeordneten Aushebern 17a-17f, welche die einzeln eintreffenden Mehrfachstapel 21 für eine gewisse Zeit vom Transportband 2 abheben und sie als Charge gemeinsam wieder auf dem Transportband 2 absetzten. Der Zeitpunkt des Eintreffens der Stapel wird von Sensoren beobachtet, die hinter den Fenstern 18 angeordnet sind. Die Ausheber bestehen vorzugsweise aus pneumatisch betriebenen Kolbenzylindereinheiten.

Nach der Chargierstation kann ein drittes Transportband 24 angeordnet sein, das die Mehrfachstapel 21 von Schmelzkäsescheiben weitertransportiert und einem weiteren Verarbeitungs- oder Verpackungsschritt zuführt.

### Zeichnungslegende

- 1: Maschinengehäuse
- 2: Transportband
- 3: Umlenkeinrichtung
- 4: Umlenkeinrichtung
- 5: erste Wendestation
- 6: zweite Wendestation
- 7: Drehkreuz
- 8: Arm, vertikal
- 9: Arm, horizontal
- 10: Fenster
- 11: Drehkreuz
- 12: Arm, vertikal
- 13: Arm, horizontal
- 14: Ausheber
- 15: Stempel
- 16: Fenster
- 17a-f: Ausheber
- 18: Fenster
- 19: Förderrichtung
- 20a-d: Einfachstapel
- 21: Mehrfachstapel
- 22: Transportband
- 23: Transportband
- 24: Transportband
- 25: Chargierstation

## Patentansprüche

1. Verfahren zum Stapeln von unverpackten Schmelzkäsescheiben, wobei aus mehreren übereinanderliegenden Schmelzkäsescheiben bestehende Einfachstapel (20a) von einer Transporteinrichtung (2) kontinuierlich einer ersten Wendestation (5) zugeführt werden, in welcher die Einfachstapel (20b) einzeln in Transportrichtung um 90° gekippt werden, daß die gekippten Einfachstapel (20c, 20d) nachfolgend einer zweiten Wendestation (6) zugeführt werden, in welcher zwei oder mehrere Einfachstapel (20c, 20d) hintereinander aufgereiht und gemeinsam in Transportrichtung um 90° gekippt werden, so daß die zwei oder mehreren Einfachstapel übereinander zu liegen kommen und einen Mehrfachstapel (21) von Schmelzkäsescheiben bilden, und wobei die beiden Wendestationen (5, 6) in der Form von Drehkreuzen (7, 11) ausgebildet sind,
**dadurch gekennzeichnet,**
**daß** das Kippen der Schmelzkäsescheiben in der ersten und der zweiten Wendestation (5, 6) jeweils durch ein Drehkreuz (7, 11) erfolgt, wobei die Schmelzkäsescheiben durch die Drehkreuze mit jeweiligen Antrieben gewendet werden, und ein auch zwischen den beiden Wendestationen durchlaufendes Transportband (2) die Schmelzkäsescheiben Ständig auf gleicher Ebene mit den Ebenen, auf denen die Stapel in den beiden Wendestationen (5,6) aufgenommen und aus diesen ausgegeben werden, transportiert.

2. Verfahren nach Anspruch 1, **dadurch gekennzeichnet, daß** mehrere nacheinander angeordnete Transporteinrichtungen (22, 23, 24) verwendet werden.

3. Verfahren nach einem der Ansprüche 1 oder 2, **dadurch gekennzeichnet, daß** die Transporteinrichtung (2) in Abhängigkeit vom Betrieb der zweiten Wendestation (6) taktend angetrieben ist.

4. Verfahren nach einem der Ansprüche 1 bis 3, **dadurch gekennzeichnet, daß** die einzelnen Mehrfachstapel (21) einer Chargierstation (25) zugeführt werden, in welcher mehrere Mehrfachstapel (21) zu einer Charge zusammengefasst werden.

5. Verfahren nach einem der Ansprüche 1 bis 4, **dadurch gekennzeichnet, daß** die Mehrfachstapel (21) durch die Transporteinrichtung (22,23,24) einem weiteren Verarbeitungsschritt zugeführt werden.

6. Vorrichtung zum Stapeln von unverpackten Schmelzkäsescheiben, mit einer Transporteinrichtung (2), mittels welcher aus mehreren übereinanderliegenden Schmelzkäsescheiben bestehende Einfachstapel (20a) einer ersten Wendestation (5) zugeführt werden, in welcher die Einfachstapel (20b) in Transportrichtung um 90° gekippt werden, wobei die Transporteinrichtung (2) die gekippten Einfachstapel (20c,20d) zu einer zweiten Wendestation (6) transportiert, welche zwei oder mehrere aneinandergereihte Einfachstapel (20c,20d) erfasst und gemeinsam in Transporteinrichtung um 90° kippt, so daß sich ein Mehrfachstapel (21) bestehend aus zwei oder mehreren übereinanderliegenden Einfachstapeln ergibt, und wobei die beiden Wendestationen (5, 6) in der Form von Drehkreuzen (7, 11) ausgebildet sind,
**dadurch gekennzeichnet,**
**daß** die erste Wendestation (5) und die zweite Wendestation (6) jeweils einen Antrieb haben, und ein auch zwischen den beiden Wendestationen durchlaufendes Transportband (2) auf gleicher Ebene mit den Ebenen, auf denen die stapel in den beiden Wendestationen aufgenommen und aus dieser ausgegeben werden können, liegt.

7. Vorrichtung nach Anspruch 6, **dadurch gekennzeichnet, daß** die Transporteinrichtung (2) aus einem Transportband besteht.

8. Vorrichtung nach Anspruch 6 oder 7, **dadurch gekennzeichnet, daß** die Transporteinrichtung aus mindestens zwei Transportbändern (22, 23) besteht, die in Reihe nacheinander angeordnet sind.

9. Vorrichtung nach einem der Ansprüche 6 bis 8, **dadurch gekennzeichnet, daß** nach der zweiten Wendestation eine Chargierstation (25) angeordnet ist, die mehrere nacheinander angeordnete Ausheber (17a-f) aufweist, welche die einzeln eintreffenden Mehrfachstapel (21) für eine gewisse Zeit vom Transportband (2) abheben und sie als Charge gemeinsam wieder auf dem Transportband absetzten.

## Claims

1. Method for stacking unpackaged slices of processed cheese, involving continuously feeding single stacks (20a) consisting of a plurality of processed cheese slices lying one on top of the other from a conveying device (2) to a first turning station (5) in which the single stacks (20b) are individually tilted through 90° in the direction of travel, thereafter feeding the tilted single stacks (20c, 20d) to a second turning station (6) in which two or more single stacks (20c, 20d) are lined up one behind the other and together tilted through 90° in the direction of travel, with the result that the two or more single stacks come to lie on top of one another and form a multiple stack (21) of processed cheese slices, and with the two turning stations (5, 6) being constructed in the form of turnstiles (7, 11),
**characterised in that** the tilting of the processed cheese slices in the first and second turning stations (5, 6) is in each case done by a turnstile (7, 11), the processed cheese slices being turned by the turnstiles with respective drive systems, and a conveyor belt (2) which also runs between the two turning stations conveys the processed cheese slices continuously at the same level as the planes on which the stacks are received in the two turning stations (5, 6) and discharged therefrom.

2. Method according to claim 1, **characterised by** the use of a plurality of conveying devices (22, 23, 24) arranged one after the other.

3. Method according to either of claims 1 or 2, **characterised in that** the conveying device (2) is driven in a timed cycle in dependence on the operation of the second turning station (6).

4. Method according to any of claims 1 to 3, **characterised in that** the individual multiple stacks (21) are fed to a charging station (25) in which a plurality of multiple stacks (21) are combined into one batch.

5. Method according to any of claims 1 to 4, **characterised in that** the conveying device (22, 23, 24) feeds the multiple stacks (21) to a further processing step.

6. Apparatus for stacking unpackaged slices of processed cheese, comprising a conveying device (2) by means of which single stacks (20a) consisting of a plurality of processed cheese slices lying one on top of the other are fed to a first turning station (5) in which the single stacks (20b) are tilted through 90° in the direction of travel, the conveying device (2) transferring the tilted single stacks (20c, 20d) to a second turning station (6) which takes hold of two or more combined single stacks (20c, 20d) and tilts them together through 90° in the direction of travel, thereby resulting in a multiple stack (21) consisting of two or more single stacks lying one on top of the other, and with the two turning stations (5, 6) being configured in the form of turnstiles (7, 11),
**characterised in that** the first turning station (5) and the second turning station (6) each have a drive system, and a conveyor belt (2) which also runs between the two turning stations is situated on the same level as the planes on which the stacks can be received in the two turning stations and discharged therefrom.

7. Apparatus according to claim 6, **characterised in that** the conveying device (2) consists of a conveyor belt.

8. Apparatus according to claim 6 or 7, **characterised in that** the conveying device consists of at least two conveyor belts (22, 23) which are arranged one after the other in line.

9. Apparatus according to any of claims 6 to 8, **characterised in that** arranged after the second turning station is a charging station (25) which features a plurality of lifters (17a-f) arranged one after the other which raise the multiple stacks (21) for a given time from the conveyor belt (2) as they arrive one by one and deposit them back on the conveyor belt together as a batch.

## Revendications

1. Procédé d'empilage de tranches de fromage fondu non emballées, des piles simples (20a) constituées de plusieurs tranches de fromage fondu posées les unes sur les autres étant amenées en continu par un dispositif de transport (2) à un premier poste de renversement (5), dans lequel les piles simples (20b) sont basculées une à une de 90 ° dans le sens du transport, les piles simples basculées (20c, 20d) étant ensuite amenées à un second poste de renversement (6), dans lequel deux ou plusieurs piles simples (20c, 20d) sont mises en rang l'une derrière l'autre et basculées en commun de 90° dans le sens du transport, pour que les deux ou les plusieurs piles simples soient finalement couchées les unes sur les autres et forment une pile multiple (21) de tranches de fromage fondu, les deux postes de renversement (5, 6) étant conçus sous forme de tourniquets (7, 11) ,
**caractérisé en ce que**
le basculement des tranches de fromage fondu est respectivement réalisé dans le premier et dans le second poste de renversement par un tourniquet (7, 11), les tranches de fromage fondu étant renversées par les tourniquets, à l'aide d'entraînements respectifs et une bande de transport (2) passant également à travers les deux postes de renversement transportant en continu les tranches de fromage fondu sur un plan égal aux plans sur lesquels les piles sont enlevées dans les postes de renversement (5, 6) et sont déposées sur ces derniers.

2. Procédé selon la revendication 1,
**caractérisé en ce que** plusieurs dispositifs de transport agencés les un derrière les autres (22, 23, 24) sont utilisés.

3. Procédé selon l'une quelconque des revendications 1 ou 2,
**caractérisé en ce que**
le dispositif de transport (2) est entraîné en cadence, en fonction de l'exploitation des deux postes de renversement 6.

4. Procédé selon l'une quelconque des revendications 1 à 3,
**caractérisé en ce que**
les piles multiples individuelles (21) sont amenées à un poste de chargement (25), dans lequel plusieurs piles multiples (21) sont regroupées en une charge.

5. Procédé selon l'une quelconque des revendications 1 à 4,
**caractérisé en ce que**
les piles multiples (21) sont amenées à un autre cycle de traitement, par le dispositif de transport (22, 23, 24).

6. Procédé d'empilage de tranches de fromage fondu non emballées, avec un dispositif de transport (2), à l'aide duquel des piles simples (20a) constituées de plusieurs tranches de fromage fondu, posées les unes sur les autres sont amenées à un premier poste de renversement (5), dans lequel les piles simples (20b) sont basculées de 90 ° dans le sens de transport (2), le dispositif de transport (2) transportant les piles simples (20c, 20d) préalablement basculées vers un autre poste de renversement (6) qui saisit deux ou plusieurs piles simples (20c, 20d) alignées les unes contre les autres et les bascule ensemble de 90 ° dans le sens de transport, pour qu'il en résulte une pile multiple (21), constituée de deux ou de plusieurs piles simples, posées les unes au-dessus des autres et les deux postes de renversement (5, 6) étant conçus sous forme de tourniquets (7, 11),
**caractérisé en ce que**
le premier poste de renversement (5) et le second poste de renversement (6) disposent chacun d'un entraînement et d'un tapis de transport (2) traversant également les deux postes de renversement et se situant sur un plan égal aux plans sur lesquels les piles sont reprises dans les deux postes de renversement et reposées sur ces derniers.

7. Dispositif selon la revendication 6,
**caractérisé en ce que**
le dispositif de transport (2) est une bande transporteuse.

8. Dispositif selon l'une quelconque des revendications 6 ou 7,
**caractérisé en ce que**
le dispositif de transport est constitué d'au moins deux bandes transporteuses (22, 23), qui sont disposées en ligne, l'une derrière l'autre.

9. Dispositif selon l'une quelconque des revendications 6 à 8,
**caractérisé en ce que**,
un poste de chargement (25), présentant plusieurs dispositifs de soulèvement (17a à 17f), qui pour un certain temps, relèvent les piles multiples (21) arrivant individuellement de la bande transporteuse (2) et les reposent sous forme de charge commune sur la bande transporteuse, est disposé en aval du second poste de renversement.
